# EUROPÄISCHE PATENTANMELDUNG

(11) **EP 2 182 321 A1**
(43) Veröffentlichungstag der Anmeldung: **05.05.2010**
(21) Anmeldenummer: 08168146.2
(22) Anmeldetag: 03.11.2008
(51) Int. Cl.: G01C 5/06, G06K 7/08, G06K 19/077, H01Q 1/22

(54) **Verfahren und System für eine stockwerksensitive Lokalisierung von RFID-Tags**

(71) Anmelder: Albis Technologies AG, 8047 Zürich (CH)
(72) Erfinder: Staemmer, Zeno, 8800, Thalwil (CH)
(74) Vertreter: Kley, Hansjörg

(57) **Zusammenfassung**

In einem Gebäude (10) ist eine stockwerksensitive Erfassung von RFID-Tags (26) lösbar mit zusätzlichen RFID-Schreib-/Lesegeräten (30), die die Bewegung der RFID-Tags (26) verfolgen oder mit Software-Massnahmen. Die vorliegende Erfindung offenbart ein einfacheres und zuvrlässiges Verfahren und System, bei denen zur stockwerksensitiven Erfassung der RFID-Tags (26) der Luftdruck (p) mit einem Luftdrucksensor (25) erfasst und mit vorgängig erfassten Referenzdruckwerten (p_{U}, p₀) verglichen wird. Daraus wird die vertikale Position (1^{st}, 2^{nd}, ..) der RFID-Tags (26) bestimmt.

## Beschreibung

Die vorliegende Erfindung betrifft ein Verfahren ein System sowie einen RFID-Träger für eine stockwerksensitive Lokalisierung von RFID-Tags nach dem Oberbegriff der Patentansprüche 1 bzw. 5 bzw. 9.

RFID-Tags sind kleine Transponder, die die RFID-Markierungen als gespeicherte Daten enthalten und diese per Funk an RFID-Schreib-/Lesegeräte übertragen. Aktive RFID-Tags bestehen aus einem Prozessor, Speicher, einer Energiequelle und einer Sende-/Empfangs¬einrichtung, die auf eine bestimmte RFID-Frequenz abgestimmt ist.

Im folgenden wird der Begriff «RFID-Schreib-/Lesegerät» der Einfachheit halber abgekürzt mit «RFID-Leser».

Systeme zur Bestimmung des momentanen Ortes von RFID-Tags sind bekannt, z.B. aus EP 1 795 915 A2 [1].

Ebenfalls ist gemäss EP 1 879 428 A1 [2] ein RFID-Träger bekannt, der ein RFID-Tag und einen Temperatursensor aufweist für die Erfassung und Übermittlung der Temperatur eines Mediums wie z.B. ein Lebensmittel in einem bestimmten Herstellungsstand. Solche RFID-Träger und entsprechende Sensoren sind unter dem Begriff «Condition Monitoring» bekannt.

RFID-basierte Lokalisierungsverfahren haben eine Ungenauigkeit in der Bestimmung des Stockwerkes in einem Haus oder einem Lager oder einer Fabrik. Dies führt dazu, dass Asset- oder Personen-Trackings-Systeme falsche Informationen bzgl. dem Stockwerk (z-Achse, vertikale Lage) liefern.

Bei Gebäuden, die massiven Stahlbeton oder gar mit metallischen Böden/Decken aufweisen, sind die Ausbreitungsbedingungen für die elektromagnetischen Wellen ungünstig, so dass sich in solchen Gebäuden das Problem einer stockwerksensitiven Erfassung/Lokalisierung weniger stellt. Hingegen in Gebäuden in Lichtbauweise ist das Problem virulent. Ebenso tritt dieses Problem bei hohen Räumen auf, insbesondere dort wo Hochregallager untergebracht sind.

Es wurden entweder zusätzliche «Gates» also besonders lokalisierte «RFID-Leser» aufgebaut, welche die Stockwerksbestimmung bei jedem Fahrstuhl/Aufgang/Abgang /Treppenhaus genau bestimmt haben. Zusätzlich hat die SW-Applikation den Wechsel eines Stockwerkes - auch wenn dies falsch detektiert wurde - wenn möglich korrigiert. Die Ungenauigkeit der bisherigen Verfahren wurde mit kostspieligen Installations-Zusätzen und Software-Logik korrigiert.

Der vorliegenden Erfindung liegt daher die Aufgabe zugrunde ein Verfahren, ein System und einen Träger von RFID-Tags anzugeben, die eine stockwerksensitive Lokalisierung/Erfassung von RFID-Tags erlauben, ohne dass am Gebäude zusätzliche Installationen vorgenommen werden müssen und die insbesondere in Gebäuden mit guten RFID-Versorgungsbedingungen eingesetzt werden können.

Diese Aufgabe wird durch die in den unabhängigen Patentansprüchen angegebenen Massnahmen gelöst. Vorteilhafte Ausgestaltungen der Erfindung sind in weiteren Ansprüchen angegeben.

So können sich die folgenden Vorteile zusätzlich ergeben:

i) Durch die Lokalisation in z-Richtung bzw. in vertikaler Richtung können grössere Überwachungszonen - das sind Zonen, die durch die RFID-Leser abgedeckt werden - gebildet werden, so dass für die Infrastruktur bei höherer Funktionalität geringere Aufwendungen erforderlich sind.

ii) In einer besonderen Anwendung der Erfindung können Druckmessungen bei Spezialräumen vorgenommen werden, beispielsweise mit einer Funkübermittlung der Druckmesswerte in Intervallen von wenigen Sekunden.

iii) Gemäss i) sind grössere Zonen mit einem geringeren Infrastrukturaufwand möglich, trotzdem bleibt die stockwerksensitive Erfassung der RFID-Tags erhalten.

Die Erfindung wird nachfolgend anhand der Zeichnung beispielsweise näher erläutert. Dabei zeigen:

Figur 1 Anordnung von RFID-Tags und RFID-Schreib-/Lesegeräten in einem Gebäude.

Figur 2 Prinzipschema eines Trägers mit RFID-Tag und Luftdrucksensor

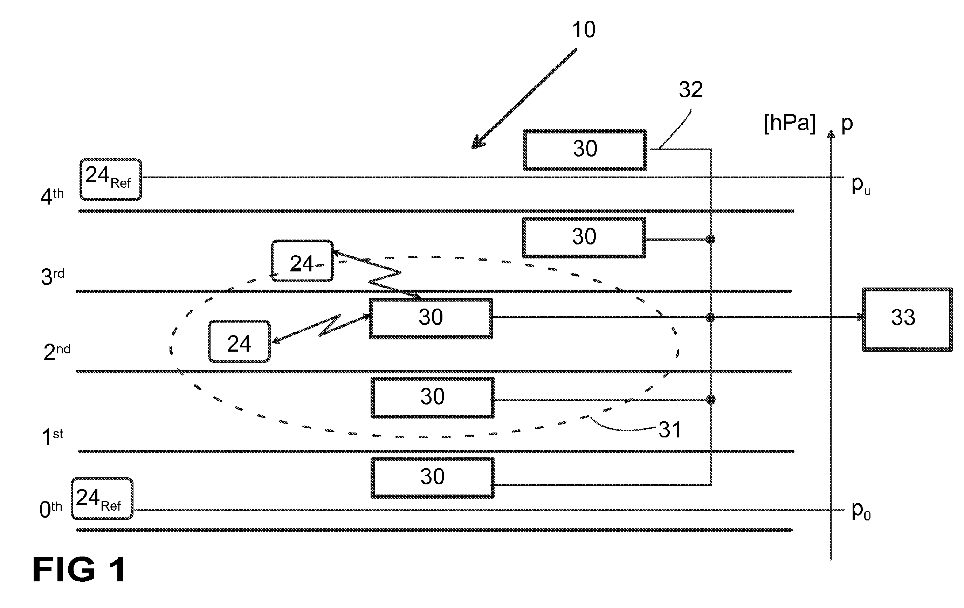

Figur 1 zeigt die Anordnung der involvierten Komponenten eines Systems zur stockwerksensitiven Erfassung von RFID-Tags 26, genau von einem Träger 24 enthaltend ein RFID-Tag 26. Ein Gebäude 30 ist schematisch mit Stockwerken 0^{th}, 1^{st}, 2^{nd} usw. dargestellt. Pro Stockwerk ist ein RFID-Schreib-/Lesegerät 30 dargestellt. In der Praxis sind pro Stockwerk jedoch mindestens zwei RFID-Schreib-/Lesegeräte 30 vorgesehen, um die Lokalisation auf dem Stockwerk z.B. in einem x7y-Koordinatensystem präziser vornehmen zu können. Die RFID-Schreib-/Lesegeräte 30 sind untereinander über ein Bussystem 32 mit einem zentralen Auswertesystem/Server 33 verbunden. Statt dem Begriff Auswertesystem 33 existiert zuweilen auch der synonyme Begriff Tracking-System 33. Bedingt durch die Architektur des Gebäudes 30 und die Ausstattung sind pro Stockwerk die RFID-Schreib-/Lesegeräte 30 nicht am gleichen Ort hinsichtlich einer Grundriss-Sicht. Durch Treppenhäuser oder leichtere Böden oder Zwischenböden kann ein RFID-Tag 26 auch eine Verbindung mit einem RFID-Schreib-/Lesegerät 30 aufnehmen, das sich auf einem anderen Stockwerk befindet als das RFID-Tag 26.

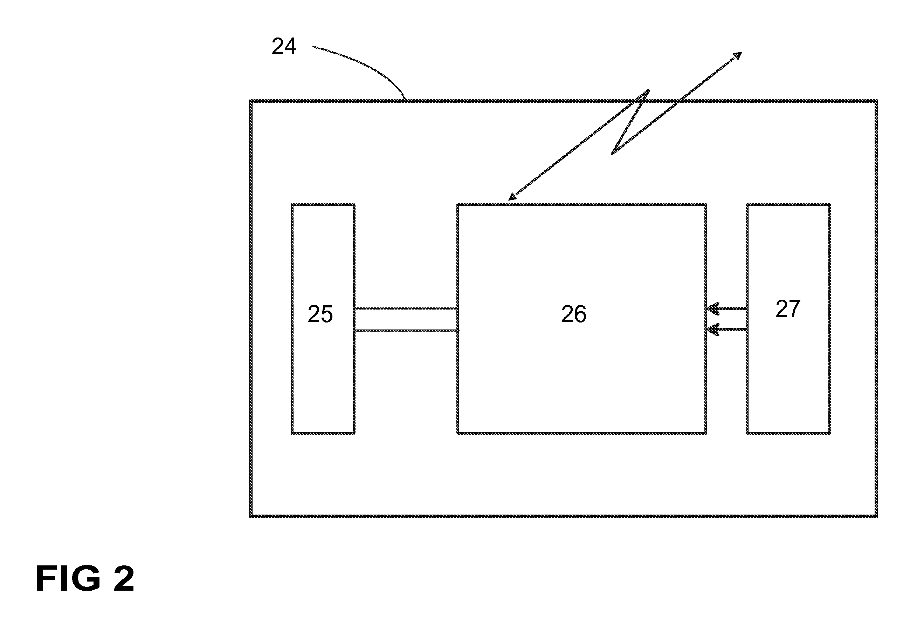

Gemäss der vorliegenden Erfindung - vgl. dazu die Figur 2 - ist das RFID-Tag 26 mit einem Luftdrucksensor 25 verbunden. Beide Komponenten sind auf einem Träger 24 angeordnet, wobei von aussen her betrachtet der nicht kundige Beobachter zwischen einem gewöhnlichen RFID-Tag und dem erfindungsgemässen Träger 24 mit RFID-Tag 26 und Luftdrucksensor 25 kaum einen Unterschied bemerken wird. Solche Luftdrucksensoren 25 sind miniaturisiert und handelsüblich, beispielsweise gemäss http://www.mikrokopter.de .

Bei einer Kommunikation zwischen dem RFID-Träger 24 bzw. dem RFID-Tag 24 und einem RFID-Schreib-/Lesegerät 30 wird der momentane vom Luftdrucksensor 25 detektierte Messwert p zusätzlich zur Identität des RFID-Tags 24 übermittelt. Mit wenigstens zwei RFID-Schreib-/Lesegeräten 30 kann auf die bekannte Weise die Lage in der (horizontalen) x/y-Ebene festgestellt werden. Die vertikale Lage in der z-Richtung wird in einem Auswertesystem 33 durch Vergleich des übermittelten Luftdruckes p mit wenigstens einem Referenzluftdruckwert p_{U}, p₀ verglichen. Dieser Referenzluftdruckwert wird periodisch oder quasikontinuierlich von sogenannten Referenz-Trägern 24_{Ref} auf die gleiche Weise dem Auswertesystem 33 übermittelt. Vorzugsweise sind wenigstens zwei Referenz-Träger 24_{Ref} im Parterre oder gar sous-sol und im Obersten Stockwerk vorgesehen. Somit lässt sich dank des übermittelten Luftdruckes die Lage eines Trägers 24 bzw. eines darauf befindlichen RFID-Tags 25 eindeutig bestimmen unabhängig davon, mit welchem RFID-Schreib-/Lesegerät 30 die Kommunikation stattgefunden hat. Die räumliche Anordnung des Auswertesystems ist völlig frei und in der Figur 1 lediglich schematisch dargestellt.

Durch die beiden Referenz-Träger 24_{Ref} kann weiter eine individuelle Drift ggf. korrigiert werden, da die relative vertikale Lage der beiden Referenz-Träger 24_{Ref} zueinander bekannt ist. Der Luftdruckunterschied p_{U} - p₀ zwischen den beiden Referenzluftdruckwert p_{U}, p₀ ist bei diesen Dimensionen von einigen Stockwerken unabhängig vom meteorologischen Luftdruck p. Auch ein Tagesgang des Luftdruckes p kann so rein rechnerisch und exakt kompensiert werden.

### Liste der verwendeten Bezugszeichen

- 10: Gebäude
- 24: Träger mit RFID-Tag und Luftdrucksensor
- 24_{Ref}: Referenz-Träger mit RFID-Tag und Luftdrucksensor
- 25: Luftdrucksensor
- 26: RFID-Tag
- 27: Energiequelle, Batterie
- 30: RFID-Schreib-/Lesegerät
- 31: Sende-/Empfangszone eines RFID-Schreib-/Lesegerätes
- 32: Bussystem
- 33: zentrales Auswertesystem/Server
- p_{U}: oberer Referenzluftdruck im Gebäude
- p₀: unterer Referenzluftdruck im Gebäude
- p: Luftdruck, meteorologischer Luftdruck

### Liste der zitierten Schriften

- [1]: EP 1 795 915 A2 «Position Locator for locating position of radio tag» Fujitsu Ltd. Kawasaki-shi, Kanagawa 211-8588 (JP)
- [2]: EP 1 879 428 A1 «Vorrichtung zum Bestimmen der Temperatur eines Mediums» WMF Württembergerische Metallwarenfabrik AG 73309 Geislingen/Steige (DE)

## Patentansprüche

1. Verfahren zur stockwerksensitiven Erfassung eines RFID-Tags (26) in einem Gebäude (10), bei welchem Verfahren
- das RFID-Tag (26) auf einem Träger (24) angeordnet ist und
- das RFID-Tag (26) für eine bidirektionale Kommunikation mit wenigstens zwei im Gebäude (10) angeordneten RFID-Schreib-/Lesegeräten (30) zur Feststellung der Anwesenheit in einer durch die RFID-Schreib-/Lesegeräten (30) definierten Zone (31) ausgelegt ist, **gekennzeichnet durch** die Verfahrensschritte,
i) Detektion des Luftdruckes (p) **durch** einen auf dem Träger (24) angeordneten Luftdrucksensor (25);
ii) Übermittlung des vom Luftdrucksensor (25) detektierten Luftdruckes als Messwert (p) an wenigstens ein RFID-Schreib-/Lesegerät (30);
iii) Vergleich des übermittelten Messwertes (p) mit einem von einem im Gebäude (10) angeordneten ortsfesten Referenzträger (24_{Ref}) erfassten Referenzdruckwertes (p₀, pᵤ);
iv) Bestimmung der vertikalen Lage des Trägers (24) aus dem Vergleich des Messwertes mit dem Referenzdruckwert (p₀, pᵤ).

2. Verfahren nach Anspruch 1
**dadurch gekennzeichnet, dass** im Verfahrensschritt iii) zwei ortsfeste Referenzträger (24_{Ref}) auf verschiedenen Stockwerken (0^{th}, 1^{st}, 2^{nd}, ..) des Gebäudes angeordnet sind und der Vergleich über die Differenz des von den beiden Referenzträgern (24_{Ref}) detektierten Referenzdruckwertes (p₀, pᵤ) vorgenommen wird.

3. Verfahren nach Anspruch 1 oder 2
**dadurch gekennzeichnet, dass** im Verfahrensschritt iii) der wenigstens eine Referenzdruckwert (p₀, pᵤ) periodisch erfasst wird.

4. Verfahren nach Anspruch 2
**dadurch gekennzeichnet, dass** pro Stockwerk (0^{th}, 1^{st}, 2^{nd}, ..) mehrere Referenzträgern (24_{Ref}) zur Erfassung des Referenzdruckwertes (p₀, pᵤ) vorgesehen sind.

5. System zur stockwerksensitiven Erfassung eines RFID-Tags (26) in einem Gebäude (10), welches System umfasst:
- Mehrere in einem Gebäude (10) angeordnete RFID-Schreib-/Lesegeräte (30) zur Feststellung der Anwesenheit in einer durch die RFID-Schreib-/Lesegeräte (30) definierten Zone (31),
- ein Bussystem (32), das die RFID-Schreib-/Lesegeräte (30) untereinander und mit einem Auswertesystem (33) verbindet;
- ein auf einem Träger (24) angeordnetes RFID-Tag (26), das für eine bidirektionale Kommunikation mit wenigstens zwei RFID-Schreib-/Lesegeräten ausgelegt ist; **gekennzeichnet durch**
i) einen auf dem Träger (24) angeordneten mit dem RFID-Tag (26) verbundenen Luftdrucksensor (25) zur Detektion des Luftdruckes als Messwert (p);
ii) eine Übermittlung des vom Luftdrucksensor (25) detektierten Luftdruckes als Messwert (p) vom RFID-Tag (26) an wenigstens ein RFID-Schreib-/Lesegerät (30) aufweist;
iii) einen Vergleich im Auswertsystem (33) des über das Bussystem (32) zum Auswertsystem (33) übermittelten Messwertes (p) mit einem von einem ortsfesten Referenzträger (24_{Ref}) erfassten Referenzdruckwert (p₀, pᵤ);
iv) eine Bestimmung der vertikalen Lage des Trägers (24) aus dem Vergleich des Messwertes (p) mit dem Referenzdruckwert (p₀, pᵤ).

6. System zur stockwerksensitiven Erfassung eines RFID-Tags (26) nach Anspruch 5
**gekennzeichnet durch** zwei auf verschiedenen Stockwerken (0^{th}, 1^{st}, 2^{nd}, ..) des Gebäudes angeordnete ortsfeste Referenzträger (24_{Ref}) und **durch** den Vergleich über die Differenz des von den beiden Referenzträgern (24_{Ref}) detektierten Luftdrucks (p₀, pᵤ)

7. System zur stockwerksensitiven Erfassung eines RFID-Tags (26) nach Anspruch 5 oder 6
**gekennzeichnet durch** eine periodische Erfassung des wenigstens einen Referenzdruckwertes (p0, pu).

8. System zur stockwerksensitiven Erfassung eines RFID-Tags (26) nach Anspruch 6
**gekennzeichnet durch** mehrere pro Stockwerk (0^{th}, 1^{st}, 2^{nd}, ..) angeordnete Referenzträger (24_{Ref}).

9. Träger (24) enthaltend ein darauf angeordnetes RFID-Tag (26), das für eine bidirektionale Kommunikation mit wenigstens zwei RFID-Schreib-/Lesegeräten ausgelegt ist zur Durchführung des Verfahrens nach einem der Ansprüche 1 bis 3 **gekennzeichnet durch** einen auf dem Träger (24) angeordneten und mit dem RFID-Tag (26) verbundenen Luftdrucksensor (25) zur Detektion des Luftdruckes als Messwert (p).
